# EUROPÄISCHE PATENTSCHRIFT

(11) **EP 1 258 003 B1**
(45) Veröffentlichungstag und Bekanntmachung des Hinweises auf die Patenterteilung: **29.12.2004**
(21) Anmeldenummer: 01913624.1
(22) Anmeldetag: 13.02.2001
(51) Int. Cl.: G11B 33/14, G11B 33/08

(54) **VORRICHTUNG ZUR REDUZIERUNG DES GERÄUSCHPEGELS UND ZUR KÜHLUNG EINER KOMPONENTE MIT BEWEGTEN TEILEN**
DEVICE FOR REDUCING THE NOISE LEVEL OF A COMPONENT WITH MOVING PARTS AND FOR COOLING THE SAME
DISPOSITIF DESTINE A REDUIRE LE NIVEAU SONORE ET A REFROIDIR UN COMPOSANT A PARTIES MOBILES

(30) Priorität: 18.02.2000 DE 10007419
(43) Veröffentlichungstag der Anmeldung: 20.11.2002
(73) Patentinhaber: Fujitsu Siemens Computers GmbH, 80807 München (DE)
(72) Erfinder: HEIN, Holger, 86199 Augsburg (DE)
(74) Vertreter: Epping Hermann & Fischer
(86) Internationale Anmeldenummer: PCT/DE2001/000545
(87) Internationale Veröffentlichungsnummer: WO 2001/061702

(56) Entgegenhaltungen:
- EP-A- 0 402 960
- EP-A- 0 564 119
- EP-A- 0 845 782
- WO-A-93/24932
- WO-A-95/32457
- DE-U- 29 905 525
- DE-U- 29 905 846

## Beschreibung

Die Erfindung betrifft eine Vorrichtung zur Reduzierung des Geräuschpegels und zur Kühlung einer Komponente mit bewegten Teilen, wie zum Beispiel einer Harddisk in einem PC-System mit einem Behälter, in der die Komponente angeordnet ist und an welchem an gegenüberliegenden Seiten Öffnungen vorgesehen sind, durch die ein Luftstrom zur Kühlung der Komponente strömen kann.

Eine derartige Vorrichtung ist zum Beispiel aus dem Deutschen Gebrauchsmuster mit dem amtlichen Aktenzeichen 29905525.6 bekannt.

Bei dieser Vorrichtung ist die Komponente auf der Unterseite mit Federn unterstützt, welche diese gegen die obere Innenwandung des Behälters pressen. An den Seiten ist die Komponente zum Behälter etwas beabstandet, so daß durch die vorgesehenen Öffnungen Luft eindringen und an der Unterseite der Komponente im Bereich der Federn diese kühlen kann.

Aus einem weiteren Deutschen Gebrauchsmuster mit dem amtlichen Aktenzeichen 29905846.8 ist es bekannt, zur Schalldämmung eine Harddisk in einem Metallbehälter anzuordnen und die Unterseite mit einer eingebetteten Schwerfolie und die Seitenwandung mit einer Schicht aus Schaumstoff zu versehen.

Beide bekannten Vorrichtungen haben den Nachteil, daß der Geräuschpegel noch nicht weit genug reduziert ist.

Aus EP-0 564 119 A ist eine Vorrichtung gemäß dem Oberbegriff des Anspruchs 1 bekannt. Dokument WO- 95 32457A beschreibt eine Vorrichtung zur Reduzierung des Geräuschpegels und zur Kühlung einer Handdisk in einem PC-System, mit einem Behälter, in dem die Harddisk angeordnet ist, wobei die Harddisk in dem Behälter vollständig von schalldämpfendem Material umgeben ist.

Der Erfindung liegt daher die Aufgabe zugrunde, die gattungsgemäße Vorrichtung derart weiterzubilden, daß trotz ausreichender Kühlung der Geräuschpegel weiter reduziert ist.

Diese Aufgabe wird erfindungsgemäß dadurch gelöst, daß die Komponente in dem Behälter vollständig von schalldämpfendem Material umgeben ist und durch das schalldämpfende Material Kanäle für die Kühlluft führen.

Durch diese Maßnahme wird eine optimale Geräuschdämmung erreicht. Das schalldämpfende Material auf allen Seiten der Komponente reduziert den Geräuschpegel in maximal möglicher weise. Da auch die Kanäle für die Kühlluft aus schalldämpfendem Material gebildet sind, wird der Schall, der von der Kühlluft mitgetragen wird, auch in diesem Bereich gedämpft.

Eine Geräuschdämmung durch schalldämmendes Material hat gleichzeitig auch eine isolierende Wirkung bezüglich der durch die Komponente erzeugte Wärme.

Deshalb muß bei einer optimalen Schalldämmung auch stets für eine gesteigerte Kühlung gesorgt werden.

Eine vorteilhafte Weiterbildung der Erfindung sieht deshalb vor, daß an der Komponente zumindest ein Kühlkörper anliegt, welcher ebenfalls über einen Luftstrom durch die Öffnungen des Behälters gekühlt wird. Zur Steigerung der Kühlung können auch zwei oder mehrere Kühlkörper pro Komponente vorgesehen sein.

Eine weitere Maßnahme zur Steigerung der Kühlung besteht darin, daß zwischen der Oberseite und der Unterseite der Komponente und dem umgebenden schalldämmenden Material ein Luftspalt besteht, durch welchen die Kühlluft strömen kann.

Eine dritte Maßnahme zur Steigerung der Kühlung besteht darin, daß die Öffnungen in dem Behälter direkt gegenüberliegend miteinander fluchtend angeordnet sind und somit die Luftwege gerade verlaufen.

Durch die lineare Anordnung der Luftwege wird die Kühlluft in ihrer Strömung nicht behindert, was wiederum zu einer stärkeren Strömung und somit zu einer gesteigerten Kühlung führt.

Die Öffnungen im Behälter sind günstigerweise im Bereich des Luftspaltes zwischen der Komponente und dem schalldämmenden Material und im Bereich der Belüftungsräume des Kühlkörpers angeordnet. Hierdurch ist gewährleistet, daß die Kühlluft an den wirksamsten Stellen linear an der Komponente vorbeiströmen kann.

Weitere Vorteile der Erfindung sind in den Unteransprüchen sowie in der nachfolgenden Figurenbeschreibung offenbart.

Anhand eines in den Zeichnungen dargestellten Ausführungsbeispiels wird die Erfindung näher erläutert.

In den Zeichnungen zeigen:
- Figur 1: ein Querschnitt durch die erfindungsgemäße Vorrichtung und
- Figur 2: den Schnitt II-II aus Figur 1.

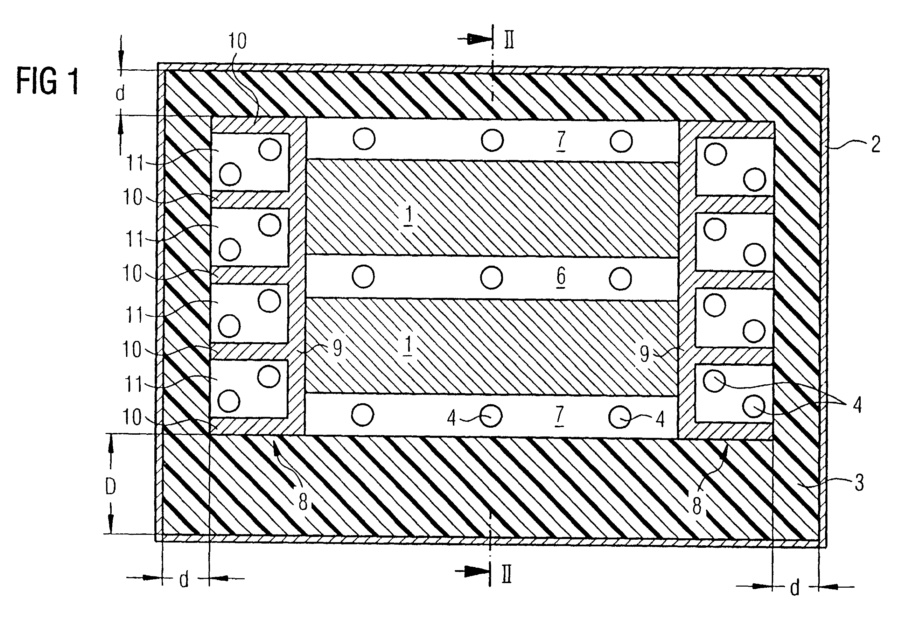

Figur 1 zeigt den Querschnitt einer Vorrichtung, welche zum Reduzieren des Geräuschpegels sowie zur Kühlung einer darin aufgenommenen Komponente 1 dient. Die Komponente 1 (nur schematisch dargestellt) dient zum Einsatz in einem PC-System und weist bewegliche Teile auf, durch welche die Geräusche erzeugt werden. Beispielsweise kann eine derarte Komponente eine Harddisk sein.

Im dargestellten Ausführungsbeispiel sind in der Vorrichtung zwei Komponenten 1 aufgenommen, wobei es ebenso möglich ist, nur eine beziehungsweise mehr als zwei aufzunehmen.

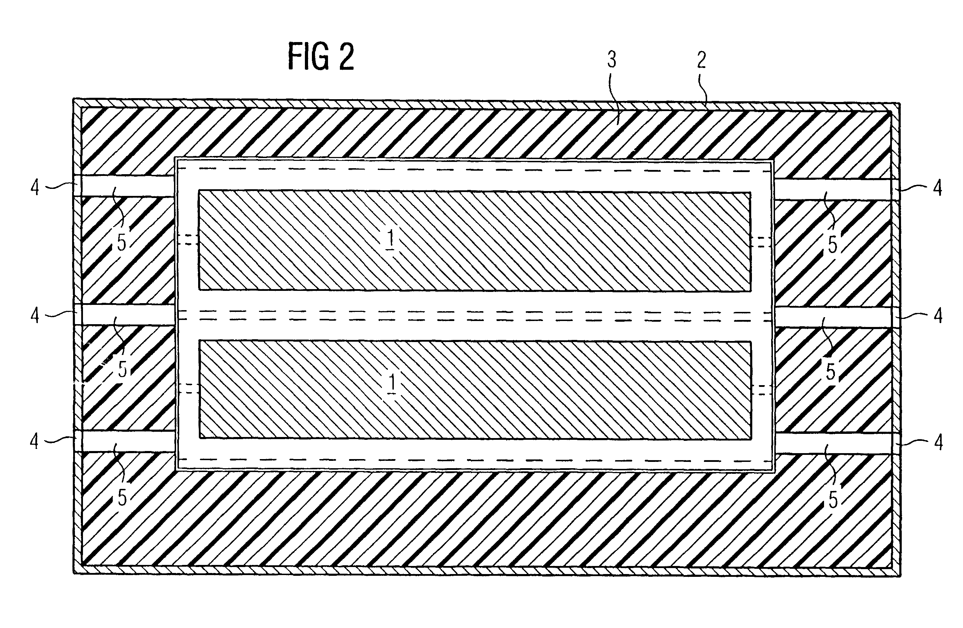

Die Komponenten 1 sind in einem Behälter 2 angeordnet, welcher komplett mit schalldämpfendem Material 3 ausgekleidet ist. Zur Kühlung der Komponenten 1 sind an dem Behälter 2 Belüftungsöffnungen 4 vorgesehen. Wie man gut in Figur 2 erkennen kann, welche den Schnitt II-II aus Figur 1 zeigt, sind diese Belüftungsöffnungen direkt gegenüberliegend und miteinander fluchtend an dem Behälter 2 angeordnet. In dem schalldämpfenden Material 3 sind an den Stellen der Belüftungsöffnungen 4 entsprechende Kanäle 5 vorgesehen, durch welche die Kühlluft für die Komponenten strömen kann.

Die Komponenten 1 sind gegenseitig über einen Hohlraum 6 und jeweils an der Ober- beziehungsweise Unterseite gegenüber dem schalldämpfenden Material 3 über einen Hohlraum 7 beabstandet. Sowohl im Bereich des Hohlraumes 6 als auch im Bereich der Hohlräume 7 sind jeweils im Behälter 2 Belüftungsöffnungen 4 vorgesehen, so daß durch die Hohlräume die Kühlluft direkt an den Komponenten vorbeiströmen kann.

Desweiteren sind seitlich der Komponenten 1 Kühlkörper 8 angeordnet, welche im wesentlichen aus einer senkrechten Platte 9 und davon nach außen waagrecht abstehenden Rippen 10 bestehen. Die Kühlkörper 8 liegen jeweils mit ihrer senkrechten Platte 9 direkt an den Seitenwandungen der Komponenten 1 an.

Der Kühlkörper 8 ist an der Oberseite und Unterseite sowie stirnseitig an den Rippen 10 anliegend mit dem schalldämpfenden Material 3 umgeben.

Zwischen den Rippen 10 entstehen somit Belüftungsräume 11, in dessen Bereich ebenfalls wieder im Behälter 2 Belüftungsöffnungen 4 und im schalldämpfenden Material die entsprechenden Kanäle 5 angeordnet sind, um die Belüftungsräume 11 mit einem Kühlluftstrom zu versorgen. Auch in diesem Bereich sind die Belüftungsöffnungen 4 exakt gegenüberliegend und miteinander fluchtend am Behälter 2 angeordnet.

Wie oben erwähnt, liegt der Kühlkörper 8 direkt mit der senkrechten Platte 9 an den Komponenten 1 an. Hierdurch ist ein idealer Wärmeübergang geschaffen. Durch den Kühlkörper 8 wird praktisch die Oberfläche der Komponente 1 erhöht und .somit eine bessere Wärmeabfuhr gewährleistet. Desweiteren wird durch die Verwendung des Kühlkörpers 8 über dessen geometrische Ausgestaltung mit waagrechten Stegen 10 und Belüftungsräume 11 zusätzlicher Raum für Kühlluft geschaffen. Durch die Belüftungsöffnungen 4 an der Front- und Rückseite des Behälters 2 läßt sich somit ein gezielter Luftstrom über die Komponenten 1 beziehungsweise über den Kühlkörper 8 erzwingen.

An der Unterseite ist zwischen dem Kühlkörper 8 beziehungsweise dem Hohlraum 7 und der Behälterinnenwandung das schalldämpfende Material 3 mit einer wesentlich größeren Dicke (Dicke D) als an der Oberseite beziehungsweise seitlich der Kühlkörper 8 (Dicke d) vorgesehen. Da durch die Schwerkraft an der Unterseite die größten Vibrationen auftreten, ist es wichtig genau an dieser Stelle die damit verbundene Übertragung von Körperschall auf den Behälter 2 durch eine dickere schälldämpfende Schicht zu minimieren.

Die erfindungsgemäße Vorrichtung löst zum einen optimal das Problem bei ausreichender Kühlung eine optimale Schalldämmung bereitzustellen und hat zum anderen auch den Vorteil, daß das schalldämpfende Material zugleich der mechanischen Befestigung der Komponenten 1 und der Kühlkörper 8 im Behälter 2 dient. Durch die erfindungsgemäße Befestigung können Stöße, die beim Transport auftreten, die Komponenten nicht beschädigen.

Das schalldämpfende Material dient somit der Aufnahme und der Reduzierung der durch die Komponenten erzeugten Vibrationen, der Schallreduzierung der Komponenten und der mechanischen Befestigung im Behälter 2.

Die Schallreduzierung wird durch die Ausbildung der Kühlwege innerhalb des schalldämpfenden Materiales gesteigert, da der Schall in den Kanälen 5 weiter gedämpft und nicht über die Kühlluft nach außen getragen wird.

## Patentansprüche

1. Vorrichtung zur Reduzierung des Geräuschpegels und zur Kühlung einer Komponente (1) mit bewegten Teilen, wie zum Beispiel einer Harddisk in einem PC-System, mit einem Behälter (2), in dem die Komponente (1) angeordnet ist und an welchem an gegenüberliegenden Seiten Lüftungsöffnungen (4) vorgesehen sind, durch die ein Luftstrom zur Kühlung der Komponente (1) strömen kann,
**dadurch gekennzeichnet, daß**
die Komponente (1) in dem Behälter vollständig von schalldämpfendem Material (3) umgeben ist und durch das schalldämpfende Material (3) Kanäle (5) für die Kühlluft führen.

2. Vorrichtung nach Anspruch 1,
**dadurch gekennzeichnet, daß**
zumindest ein an der Komponente (1) anliegender Kühlkörper (8) vorgesehen ist, welcher ebenfalls über den Luftstrom durch die Belüftungsöffnungen (4) gekühlt wird.

3. Vorrichtung nach Anspruch 2,
**dadurch gekennzeichnet, daß**
beidseitig der Komponente (1) Kühlkörper (8) vorgesehen sind.

4. Vorrichtung nach Anspruch 2 oder 3,
**dadurch gekennzeichnet, daß**
der Kühlkörper (8) eine senkrechte Platte (9) aufweist, die an der Komponente (1) anliegt und von dieser senkrechten Platte (9) waagrechte Rippen (10) abstehen.

5. Vorrichtung nach Anspruch 4,
**dadurch gekennzeichnet, daß**
der Kühlkörper (8) an den Außenseiten der obersten und untersten Rippe (10) sowie an den Stirnseiten der Rippen (10) anliegend von dem schalldämpfenden Material (3) umgeben ist.

6. Vorrichtung nach einem der Ansprüche 1 bis 5,
**dadurch gekennzeichnet, daß**
zwischen der Oberseite der Komponente (1) und dem schalldämpfenden Material (3) beziehungsweise zwischen der Unterseite der Komponente (1) und dem schalldämpfenden Material (3) ein Hohlraum (7) vorgesehen ist.

7. Vorrichtung nach einem der Ansprüche 1 bis 6,
**dadurch gekennzeichnet, daß**
die Belüftungsöffnungen (4) im Behälter gegenüberliegend und miteinander fluchtend angeordnet sind und die Luftwege gerade verlaufen.

8. Vorrichtung nach einem der Ansprüche 1 bis 7,
**dadurch gekennzeichnet, daß**
zwei oder mehrere Komponenten im Behälter (2) übereinander angeordnet vorgesehen sind und die Komponenten jeweils durch einen Hohlraum (6) beabstandet sind.

9. Vorrichtung nach Anspruch 8,
**dadurch gekennzeichnet, daß**
die Belüftungsöffnungen im Bereich der Hohlräume (6, 7) und im Bereich der zwischen den Kühlrippen (10) gebildeten Belüftungsräumen (11) des Kühlkörpers (8) angeordnet sind.

10. Vorrichtung nach einem der Ansprüche 1 bis 9,
**dadurch gekennzeichnet, daß**
das schalldämpfende Material (3) auf der Unterseite der Komponente (1) eine größere Dicke (D) als auf allen anderen Seiten aufweist.

## Claims

1. Apparatus for reducing the noise level of and for cooling a component (1) with moving parts, such as a hard disk in a PC system, which apparatus has a container (2) in which the component (1) is arranged and on opposite sides of which ventilation openings (4) are provided through which air for cooling the component (1) can flow,
**characterized in that**
the component (1) in the container is completely surrounded by sound-absorbing material (3), and channels (5) for the cooling air are routed through the sound-absorbing material (3).

2. Apparatus according to Claim 1,
**characterized in that**
at least one heat sink (8) which bears against the component (1) is provided and is likewise cooled by means of the flow of air through the ventilation openings (4).

3. Apparatus according to Claim 2,
**characterized in that**
heat sinks (8) are provided on both sides of the component (1).

4. Apparatus according to Claim 2 or 3,
**characterized in that**
the heat sink (8) has a vertical plate (9) which bears against the component (1), and horizontal ribs (10) protrude from this vertical plate (9).

5. Apparatus according to Claim 4,
**characterized in that**
the heat sink (8) is surrounded by the sound-absorbing material (3) such that it bears against the outer faces of the topmost and bottommost ribs (10) and against the end faces of the ribs (10).

6. Apparatus according to one of Claims 1 to 5,
**characterized in that**
a cavity (7) is provided between the top face of the component (1) and the sound-absorbing material (3), and between the bottom of the component (1) and the sound-absorbing material (3).

7. Apparatus according to one of Claims 1 to 6,
**characterized in that**
the ventilation openings (4) in the container are arranged opposite each other and aligned with one another, and the air paths run in a straight line.

8. Apparatus according to one of Claims 1 to 7,
**characterized in that**
two or more components are provided in the container (2), arranged one above the other, and the components are each separated by a cavity (6).

9. Apparatus according to Claim 8,
**characterized in that**
the ventilation openings are arranged in the region of the cavities (6, 7) and in the region of the ventilation spaces (11) in the heat sink (8) formed between the cooling ribs (10).

10. Apparatus according to one of Claims 1 to 9,
**characterized in that**
the thickness (D) of the sound-absorbing material (3) is greater on the lowerface of the component (1) than on all the other faces.

## Revendications

1. Dispositif pour réduire le niveau de bruit et pour refroidir un composant (1) à parties mobiles, comme par exemple un disque dur dans un système d'ordinateur personnel, comportant un réceptacle (2) dans lequel le composant (1) est monté et sur les côtés opposés duquel sont prévues des ouvertures (4) d'aération par lesquelles un courant d'air peut s'écouler pour le refroidissement du composant (1),
**caractérisé en ce que**
le composant (1) est entouré dans le réceptacle entièrement de matériau (3) amortissant le son, et **en ce qu'**il passe par le matériau (3) amortissant le son des canaux (5) pour l'air de refroidissement.

2. Dispositif suivant la revendication 1,
**caractérisé en ce que**
il est prévu au moins un élément (8) refroidissant qui s'applique au composant (1) et qui est refroidi également par l'intermédiaire du courant d'air dans les ouvertures (4) d'aération.

3. Dispositif suivant la revendication 2,
**caractérisé en ce que**
il est prévu des éléments (8) refroidissants de part et d'autre des composants (1).

4. Dispositif suivant la revendication 2 ou 3,
**caractérisé en ce que**
l'élément (8) refroidissant comporte une plaque (9) verticale qui s'applique au composant (1), et **en ce que** des nervures (10) horizontales font saillie de cette plaque (9) verticale.

5. Dispositif suivant la revendication 4,
**caractérisé en ce que**
l'élément (8) refroidissant est entouré du matériau (3) amortissant le son d'une manière qui s'applique aux faces extérieures de la nervure (10) la plus haute et la plus basse, ainsi qu'aux faces frontales des nervures (10).

6. Dispositif suivant l'une des revendications 1 à 5,
**caractérisé en ce que**
il est prévu une cavité (7) entre la face supérieure du composant (1) et le matériau (3) amortissant le son et/ou entre la face inférieure du composant (1) et le matériau (3) amortissant le son.

7. Dispositif suivant l'une des revendications 1 à 6,
**caractérisé en ce que**
les ouvertures (4) d'aération sont ménagées dans le réceptacle face à face et en alignement l'une par rapport à l'autre, et **en ce que** les trajets de l'air s'étendent de manière rectiligne.

8. Dispositif suivant l'une des revendications 1 à 7,
**caractérisé en ce que**
il est prévu deux ou plusieurs composants superposés dans le réceptacle (2), et **en ce que** les composants sont mis à distance respectivement par une cavité (6).

9. Dispositif suivant la revendication 8,
**caractérisé en ce que**
les ouvertures d'aération sont ménagées dans la région des cavités (6, 7) et dans la région des zones (11) d'aération de l'élément (8) refroidissant formées entre les nervures (10) de refroidissement.

10. Dispositif suivant l'une des revendications 1 à 9,
**caractérisé en ce que**
le matériau (3) amortissant le son comporte, sur la face inférieure du composant (1), une épaisseur (D) plus grande que sur toutes les autres faces.
